(19) Europäisches Patentamt
European Patent Office
Office européen des brevets

(11) **EP 3 142 244 B1**

(12) **EUROPÄISCHE PATENTSCHRIFT**

(45) Veröffentlichungstag und Bekanntmachung des Hinweises auf die Patenterteilung:
**11.11.2020  Patentblatt 2020/46**

(51) Int Cl.:
*H02P 8/38* *(2006.01)*        *H02P 8/00* *(2006.01)*

(21) Anmeldenummer: **15002645.8**

(22) Anmeldetag: **10.09.2015**

(54) **VERFAHREN ZUR DETEKTION EINES SCHRITTVERLUSTES BEI EINEM SCHRITTMOTOR UND ZUGEHÖRIGE ELEKTRONISCHE STEUERUNG EINES SCHRITTMOTORS**

METHOD FOR DETECTING A STEP LOSS FOR A STEPPER MOTOR AND RELATED ELECTRONIC CONTROL OF A STEPPING MOTOR

PROCEDE DE DETECTION D'UNE PERTE DE PAS DANS UN MOTEUR PAS A PAS ET COMMANDE ELECTRONIQUE ASSOCIEE D'UN MOTEUR PAS A PAS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**15.03.2017  Patentblatt 2017/11**

(73) Patentinhaber: **Bucher Hydraulics GmbH**
**79771 Klettgau (DE)**

(72) Erfinder:
• **Klug, Michael**
  **44892 Bochum (DE)**
• **Rüter, Markus**
  **45657 Recklinghausen (DE)**
• **Richter, Mirko**
  **42551 Velbert (DE)**

(74) Vertreter: **Kahlhöfer, Hermann et al**
**karo IP Patentanwälte**
**Kahlhöfer Rößler Kreuels PartG mbB**
**Platz der Ideen 2**
**40476 Düsseldorf (DE)**

(56) Entgegenhaltungen:
EP-A2- 0 305 876        EP-A2- 1 046 971
DE-A1- 4 230 873        US-A1- 2003 214 265
US-A1- 2012 098 473

**Beschreibung**

Die vorliegende Erfindung betrifft Verfahren zur Detektion von Schrittverlusten eines Schrittmotors, und eine Steuerung eines Schrittmotors, die eine solche Detektion ermöglicht.

Bei vielen Positionieraufgaben stellt ein Schrittmotor die ideale Lösung für einen geeigneten Antrieb dar. Vom Aufbau her ähnelt er grundsätzlich dem einer Synchronmaschine. Ein wesentlicher Unterschied besteht in einer weitaus höheren Polpaarzahl des Schrittmotors, wodurch eine feine Positionierung des Rotors erst möglich wird. Ein Schrittmotor weist in der Bauform eines Hybridschrittmotors, der am häufigsten vorkommenden Bauform, einen Rotor aus einem Permanentmagneten auf, dessen Pole als zwei gezahnte gegeneinander um einen halben Zahn versetzte Eisenkränze ausgeführt sind.

Ein solcher Schrittmotor, wie er auch in Verbindung mit der vorliegenden Erfindung Anwendung finden kann, ist beispielsweise in der US 2014/0184030 A1 beschrieben. Solche und ähnliche Schrittmotoren sind in großer Zahl im Stand der Technik bekannt. In dieser Schrift wird auch das Thema der genauen Positionsbestimmung bei von einem solchen Schrittmotor bewegten Teilen behandelt. Hierzu wird ein besonderer Sensor verwendet.

Aus der US 2004/0032231 A1 ist es auch schon bekannt, bei einem Schrittmotor einen Schrittverlust ohne Anwendung von zusätzlichen Sensoren durch Auswertung von Signalen der elektronischen Steuerung des Schrittmotors zu erreichen. Das beschriebene Messverfahren ist aber nicht ohne weiteres für instationäre Betriebszustände des Schrittmotors geeignet und erfordert die realtiv komplexe Auswertung von harmonischen Schwingungsvorgängen.

Aus der US 7 880 423 B2 ist auch schon bekannt, dass man aus einer induzierten Gegenspannung eines Schrittmotors Informationen zu einem Schrittverlust gewinnen kann. Auch dieses Verfahren ist aber nicht für alle Betriebszustände eines Schrittmotors geeignet und wegen einer bei dem beschriebenen Verfahren erforderlichen Integration der auszuwertenden Signale ist auch eine schnelle Detektion eines einzelnen Schrittverlustes nicht vorgesehen.

Auch die WO 2007/089258 A1 beschreibt ein Verfahren zu Feststellung von Schrittverlusten bei einem Schrittmotor ohne Verwendung zusätzlicher Sensoren. Das beschriebene Verfahren eignet sich zur Feststellung, dass ein bestimmter Anschlag oder dergleichen erreicht ist, lässt sich aber nicht in allen Betriebszuständen zur Feststellung von einzelnen Schrittverlusten einsetzen.

Weiter ist aus der US 7 591 448 B2 ein hydraulisches Steuerventilsystem bekannt, welches von einem Schrittmotor angetrieben wird. Für solche Ventile sind eine genaue Kontrolle des Schrittmotors und die schnelle Erkennung von Schrittverlusten in allen Betriebszuständen besonders wichtig. Für solche und ähnliche Anwendungen ist die vorliegende Erfindung daher von besonderem Nutzen.

Auch in vielen anderen Anwendungen ist die aktuelle Position des Rotors eines Schrittmotors für die Funktionalität des Systems unbedingt erforderlich. Dank der Drehung des Schrittmotors in einer Abfolge von einzelnen Schritten, lässt sich die Rotorposition von einer Ansteuerelektronik durch Inkrementieren bzw. Dekrementieren der ausgegebenen Schritte sehr leicht ermitteln. Diese einfache Art der Positionserkennung ist allerdings nur möglich, so lange der Schrittmotor nicht überlastet wird. Das geschieht, sobald das Lastmoment, welches auf den Schrittmotor einwirkt, größer wird als das maximal vom Schrittmotor abzugebende Drehmoment, das wiederum maßgeblich vom eingeprägten Strom der Ansteuerelektronik bestimmt wird.

Bei einer Überlastung fällt der Schrittmotor außer Tritt. Der Rotor kann dem vorgegebenen Feld des Stators nicht mehr folgen, wodurch er meist wiederholt Schritte verliert. Es ist daher Aufgabe der vorliegenden Erfindung, einen Schrittmotor ohne den Einsatz von Sensoren elektronisch zu überwachen, und zwar in einem weiten Bereich von Betriebszuständen, um einen Schrittverlust schnell und zuverlässig erkennen zu können, um darauf mit geeigneten Maßnahmen zu reagieren. Insbesondere soll die Überwachung in eine Steuerelektronik eines Schrittmotors integriert werden und die dort verfügbaren Informationen auswerten und ausnutzen.

Auf diese Weise soll eine Steuerung eines Schrittmotors auch für anspruchsvolle Aufgaben ertüchtigt werden, beispielsweise für den Antrieb von Hydraulikventilen, bei denen eine Positioniergenauigkeit von 5 bis 10 $\mu$m erforderlich sein kann und die z.B. bei Landmaschinen unter sehr rauen Umgebungsbedingungen eingesetzt werden, wobei außerdem ein schnelles Bewegen einer Zahnstange erforderlich sein kann, so dass es Betriebsarten mit zunehmender, abnehmender und konstanter Drehzahl eines Schrittmotors geben kann.

Zur Lösung dieser Aufgabe dienen ein Verfahren nach dem unabhängigen Anspruch 1 und eine elektronische Steuerung nach dem unabhängigen Anspruch 10. Vorteilhafte Ausgestaltungen, die einzeln oder in technisch sinnvoller Weise miteinander kombiniert angewendet werden können, sind in den jeweils abhängigen Ansprüchen angegeben.

Das erfindungsgemäße Verfahren zur elektronischen Detektion eines Schrittverlustes bei einem Schrittmotor mit einer elektronischen Steuerung, beruht darauf, dass das zeitliche Verhalten der Wirkleistung (dP/dt), die der Schrittmotor von einer Versorgungsquelle bezieht, gemessen wird, wobei die Wirkleistung aus einer gemeinsamen Strommessung der elektronischen Steuerung für alle Phasen ermittelt wird. Es hat sich gezeigt, dass sich z. B. durch eine weiter unten näher beschriebene Modifikation bekannter Endstufen eine gemeinsame Strommessung aller Phasen eines Schrittmotors verwirklichen lässt, wobei die zeitliche Änderung der so ermittelten Wirkleistung bei einem Schrittverlust ein charakteristisches Verhalten zeigt, welches festgestellt werden kann. Dabei wird vorausgesetzt, dass es im Normalbetrieb der betrachteten Anwendungen keine sprunghaften Veränderungen der Last gibt, so dass große Drehmomentsprünge als Schrittverlust interpretiert werden können.

Bevorzugt weist die Endstufe dazu einen gemeinsamen Zwischenkreiskondensator parallel zur Stromversorgungsquelle für alle Phasen auf, so dass der Strom (I) von diesem zu den einzelnen H-Brücken einer Endstufe gemessen und dessen zeitliches Verhalten analysiert werden kann, insbesondere ein zeitlicher Verlauf der Wirkleistung (dP/dt) auf ein typisches Verhalten für einen Schrittverlust überwacht werden kann.

In einer bevorzugten Ausführungsform, die es erlaubt, einen Schrittmotor in verschiedenen Betriebssituationen auf einen Schrittverlust zu überwachen, weist das Verfahren folgende Verfahrensschritte auf:

a. Einteilung des Betriebs des Schrittmotors in mindestens zwei Betriebsarten, nämlich eine erste Betriebsart mit einer im Wesentlichen konstanten Drehzahl und eine zweite Betriebsart mit zunehmender oder abnehmender Drehzahl und Ermittlung, ob sich der Schrittmotor in einer der Betriebsarten befindet;

b. Feststellung des Auftretens eines Schrittverlustes in der ersten Betriebsart durch Überwachung der Wirkleistung, die der Schrittmotor von einer Versorgungsquelle bezieht;

c. Feststellung des Auftretens eines Schrittverlustes in der zweiten Betriebsart durch Überwachung einer in dem Schrittmotor induzierten Gegenspannung.

Es hat sich gezeigt, dass bekannte Verfahren zur Feststellung von Schrittverlusten hauptsächlich bei bestimmten Drehzahlen oder in bestimmten Betriebsarten zuverlässig funktionieren, aber nicht zuverlässig in allen vorkommenden Betriebsarten. Durch die Umschaltung zwischen verschiedenen Bestimmungsverfahren bei verschiedenen Betriebsarten lassen sich typische Abläufe bei Antrieben mit Schrittmotoren vollständig und sicher auf Schrittverluste überwachen, wodurch die Positioniergenauigkeit und Zuverlässigkeit, beispielsweise bei Ventilantrieben, erheblich verbessert werden kann.

Besonders bevorzugt kann das erfindungsgemäße Verfahren angewandt werden bei einem zwei-phasigen Hybrid-Schrittmotor mit einer Vielzahl, insbesondere mehr als 20, magnetischer Polpaare am Außenumfang eines Permanentmagnetrotors umgeben von einem Stator mit einer geraden Anzahl von Magnetspulen an seinem Innenumfang, insbesondere 6 bis 12, und wobei in der ersten Betriebsart ein zeitlicher Verlauf (dP/dt) der Wirkleistung auf ein typisches Verhalten für einen Schrittverlust überwacht wird und in der zweiten Betriebsart die induzierte Gegenspannung auf das Überschreiten eines Grenzwertes als Signal für einen Schrittverlust überwacht wird. Zweiphasige Hybrid-Schrittmotoren, wie sie im Stand der Technik umfassend beschrieben sind, werden häufig für Positionieraufgaben eingesetzt und eignen sich durch die Einfachheit ihrer Steuerelektronik besonders für die Anwendung der vorliegenden Erfindung.

Um verschiedene Betriebsarten eines Schrittmotors zu unterscheiden, wird bevorzugt das zeitliche Verhalten der Drehzahl aus einer Amplitude der induzierten Gegenspannung und/oder aus den Steuersignalen (Sollwertvorgaben für die Drehzahl) für den Schrittmotor gewonnen. Die Drehzahl kann daher ohne die Verwendung von Sensoren ermittelt werden, ebenso wie ihre zeitliche Ableitung, aus der sich bestimmen lässt, welche Größe die Drehzahl hat und ob die Drehzahl im Wesentlichen konstant (erste Betriebsart) ist oder sich ändert (zweite Betriebsart). Daraus kann die Umschaltung zwischen zwei (oder mehr) Methoden der Schrittverlusterkennung abgeleitet werden.

Bei einer bevorzugten Ausführungsform der Erfindung wird in einer Auswerteeinheit zunächst ermittelt, ob sich der Schrittmotor in einer der beiden Betriebsarten befindet, wobei dann je nach festgestellter Betriebsart die zugehörige Art der Überwachung eingeschaltet und die jeweils andere abgeschaltet wird, wobei bei der Feststellung eines Schrittverlustes der Schrittmotor angehalten oder in einen vorgebbaren Zustand gebracht wird. Gerade bei Hydraulikventilen und ähnlichen Anwendungen kann ein undefinierter Zustand durch Schrittverluste zu gefährlichen Situationen und/oder Schäden führen, so dass eine schnelle Abschaltung oder die Wiederherstellung einer definierten Position bei Erkennen eines Schrittverlustes von großer Bedeutung sind.

Prinzipiell kann es bei im Betrieb befindlichen Schrittmotoren einen Sonderfall geben, den man als besonderen Betriebszustand betrachten kann, bei dem die Feststellung eines Schrittverlustes nützlich ist. Wenn die Drehzahl des Schrittmotors Null ist und der Schrittmotor elektronisch im Stillstand gehalten wird, kann es vorkommen, dass durch eine Einwirkung von außen, beispielsweise eine mechanische Belastung durch einen Schlag oder dergleichen, quasi ein Schritt des Antriebs verursacht wird, der nicht vorgesehen ist. Auch solche Vorgänge können gemäß der vorliegenden Erfindung erkannt werden. Dazu wird bei einer weiteren Ausführung der Erfindung zusätzlich bei elektronisch im Stillstand gehaltenem Schrittmotor die Wirkleistung zur Feststellung eines Schrittverlustes durch eine externe Einwirkung überwacht.

Um zu vermeiden, dass der Schrittmotor Bewegungen macht, bei denen Schrittverluste nicht sicher festgestellt werden können, wird der Schrittmotor bevorzugt so gesteuert, dass er bei jeder Bewegung eine Mindestgeschwindigkeit erreicht. Das stellt sicher, dass Schrittverluste bei zu kleinen Wegen oder zu langsamen Bewegungen nicht unerkannt auftreten können, weil sie spätestens bei Erreichen der vorgegebenen Mindestgeschwindigkeit oder des Mindestweges nachträglich bemerkt werden. Falls erforderlich, kann auch eine maximale Geschwindigkeit vorgegeben werden, wenn die Messgenauigkeit für Schrittverluste bei großen Drehzahlen des Schrittmotors nicht ausreicht.

Die Offenbarung erlaubt auch, den Abstand zwischen zwei die Bewegung des Schrittmotors hemmenden Hindernissen (mechanische Anschläge oder elektrische Schwellen und dergleichen) durch hin und her Verfahren des Schrittmotors in Richtung der Hindernisse bis zu einem jeweiligen Schrittverlust und Zählen der Schritte zwischen den zwei gemessenen Schrittverlusten an den Hindernissen zu messen. Diese Messung ist durch die erfindungsgemäße Lösung der Schrittverlusterkennung sehr genau, unabhängig davon, in welcher Betriebsart die Hindernisse erreicht werden. Man kann damit auch eine Position genau mitten zwischen den Hindernissen definieren und beispielsweise ein mechanisches Spiel in einem System ermitteln.

Die vorliegende Erfindung betrifft auch eine elektronische Steuerung eines Schrittmotors mit einer Vorrichtung zur Detektion eines Schrittverlustes bei einem von der Steuerung steuerbaren Schrittmotor mit folgenden Merkmalen:

a. Die elektronische Steuerung ist mit einer Versorgungsquelle verbindbar und weist einen Leistungsmesser auf zur Messung der von dem Schrittmotor aus der Versorgungsquelle aufgenommenen Wirkleistung;

b. Die elektronische Steuerung weist eine Endstufe mit nur einem gemeinsamen Zwischenkreiskondensator für alle Phasen, wobei der Leistungsmesser einen zwischen Zwischenkreiskondensator und Schrittmotor angeordneten Strommesser umfasst, wobei der Leistungsmesser (5) zur Überwachung der Wirkleistung (P) einen Analysator (16) zur Erkennung eines für den Schrittverlust typischen Signalverlaufes der Wirkleistung (P) umfasst.

Mit einer solchen Endstufe lässt sich eine summarische Leistungsmessung ohne großen Aufwand verwirklichen.

In einer bevorzugten Ausführungsform zur Überwachung verschiedener Betriebsarten sind noch folgende zusätzliche Merkmale von Vorteil:

c. Die elektronische Steuerung weist eine Einrichtung zur Messung einer in dem Schrittmotor induzierten Gegenspannung auf;

d. Die elektronische Steuerung enthält eine Auswerteeinheit, die bei einer ersten Betriebsart mit einer im Wesentlichen konstanten Drehzahl, aus einer Überwachung der Wirkleistung und bei einer zweiten Betriebsart mit zunehmender oder abnehmender Drehzahl aus einer Überwachung der induzierten Gegenspannung einen Schrittverlust erkennen kann.

Wie oben erwähnt eignet sich diese Steuerung besonders für einen zwei-phasigen Schrittmotor, insbesondere einen Hybrid-Schrittmotor mit einer Vielzahl von magnetischen Polpaaren am Außenumfang eines Permanentmagnetrotors im Inneren eines Stators mit einer geraden Anzahl von Magnetspulen an seinem Innenumfang. Typische Schrittmotoren haben beispielsweise 50 magnetische Polpaare und 12 Magnetspulen mit gezähnten Spulenkernen mit entsprechendem Zahnabstand.

Bevorzugt weist die Auswerteeinheit bei einer von außen zugeführten Drehzahlvorgabe (Sollwert) zur Bestimmung der jeweiligen Betriebsart eine Messeinheit zur Messung der Änderung der Drehzahl pro Zeiteinheit auf und einen Umschalter zur Umschaltung von der Überwachung der Wirkleistung zur Überwachung der induzierten Gegenspannung in Abhängigkeit von der Änderung der Drehzahl pro Zeiteinheit und/oder der Drehzahl.

Bei einer bevorzugten Ausführungsform der Erfindung umfasst der Leistungsmesser zur Überwachung der Wirkleistung ein Analysator zur Erkennung eines für einen Schrittverlust typischen Signalverlaufes, insbesondere eines signifikanten Abfalls der Wirkleistung pro Periode eines Phasenstroms, wobei ein Schalter zur sofortigen Abschaltung des Phasenstroms bei Erkennung eines Schrittverlustes vorhanden ist.

Weiterhin enthält die Einrichtung zur Messung der induzierten Gegenspannung bevorzugt einen Schwellwertschalter zur Erkennung einer Unterschreitung eines vorgebbaren Schwellwertes durch die induzierte Gegenspannung bei einem Nulldurchgang eines Phasenstroms als Hinweis auf einen Schrittverlust, wobei ein Schalter zur sofortigen Abschaltung des Phasenstroms bei Erkennung eines Schrittverlustes vorhanden ist.

Vorteilhafte Ausgestaltungen und Ausführungsbeispiele der Erfindung und weitere Einzelheiten und der Erfindung zu Grunde liegenden technischen Zusammenhänge werden im Folgenden anhand der Zeichnung näher erläutert. Es zeigen:

Fig. 1 schematisch den prinzipiellen Aufbau einer elektronischen Steuerung,
Fig. 2 schematisch den Aufbau eines Schrittmotors,
Fig. 3 ein Diagramm mit dem Zusammenhang zwischen Drehmoment und Polradwinkel bei einem Schrittmotor
Fig. 4 den Aufbau einer Endstufe mit gemeinsamem Zwischenkreiskondensator,
Fig. 5 ein Oszilloskopbild der Messung von Wirkleistung und Phasenstrom bei einem Schrittverlust,
Fig. 6 schematisch die Funktionsweise eines Schrittmotorcontrollers (TI DRV8711 - Datasheet DRV8711; SLVSC40B, October 2013)
Fig. 7 ein Diagramm mit Markierung geeigneter Zeitpunkte für eine Messung der induzierten Gegenspannung,
Fig. 8 ein Oszilloskopbild vom Ablauf einer korrekten Messung der induzierten Gegenspannung,

Fig. 9 ein Oszilloskopbild vom Ablauf einer nicht korrekten Messung der induzierten Gegenspannung,

Fig. 10 ein Diagramm mit einem schematisierten typischen Bewegungsprofil eines Schrittmotors,

Fig. 11 ein Oszilloskopbild von der Erkennung eines Schrittverlustes aus dem Stillstand eines Schrittmotors heraus,

Fig. 12 Schematisch einen Schrittmotorantrieb zwischen zwei Anschlägen,

Fig. 13 Diagramme mit dem Verlauf von Statorfeld, Auslenkung einer Zahnstange und Polradwinkel über die Zeit bei einer Loseerkennung, und

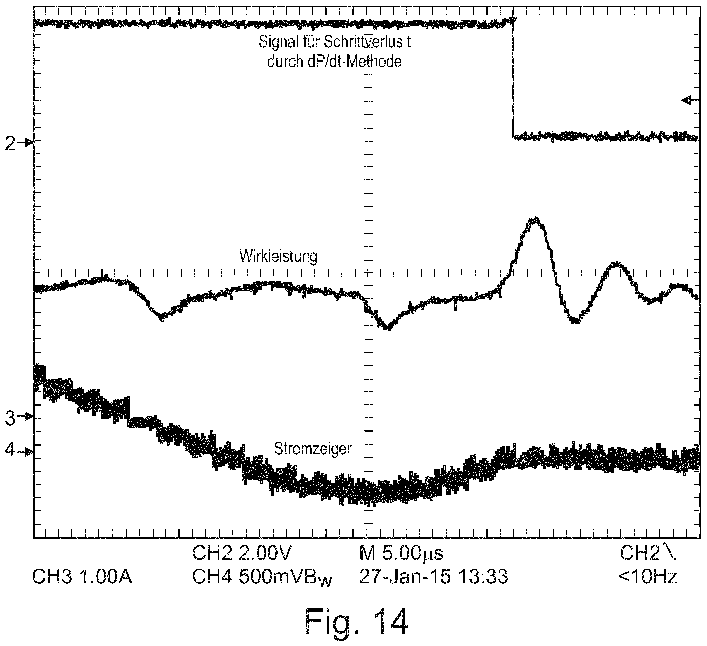

Fig. 14 ein Oszilloskopbild mit Wirkleistungssignal bei einer Loseerkennung.

Um die Problematik der Überlastung eines Schrittmotors 1 und die damit verbundenen Schrittverluste auch ohne externen Sensor sicher zu erkennen, wird ein besonderes Verfahren zur Erkennung eines bestimmten Musters im zeitlichen Verlauf der Wirkleistung benutzt, vorzugsweise werden mindestens zwei miteinander kombinierbare Ansätze verfolgt, die im Folgenden näher beschrieben werden.

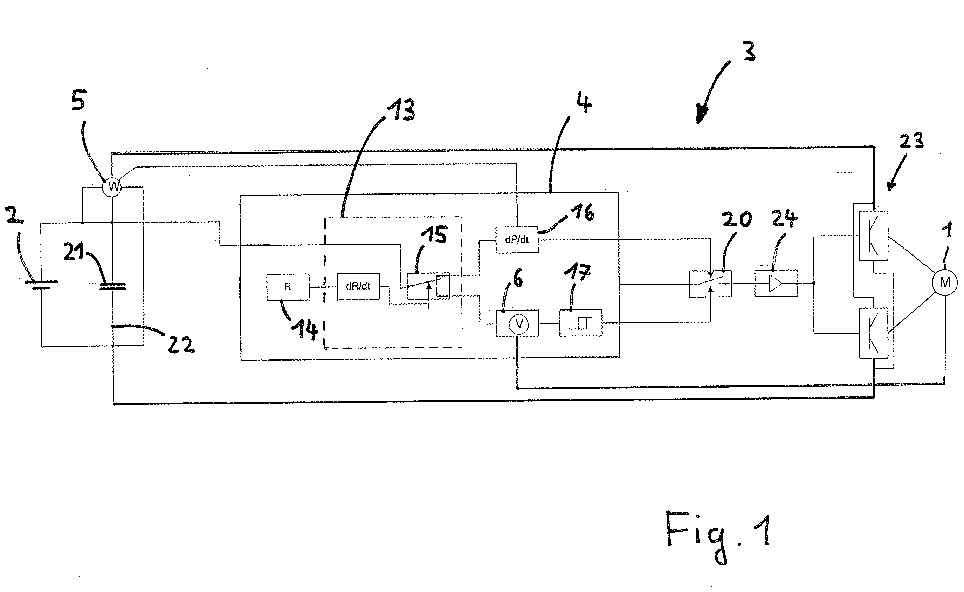

Fig. 1 zeigt schematisch den prinzipiellen Aufbau einer elektronischen Steuerung mit Schrittverlustüberwachung. Ein Schrittmotor 1 wird von einer Versorgungsquelle 2 mit elektrischer Energie versorgt. Dabei wird der Schrittmotor 1 von einer elektronischen Steuerung 3 über eine Endstufe 23 angesteuert. Die Endstufe 23 ist so gestaltet, dass es einen gemeinsamen Zwischenkreis 22 mit einem gemeinsamen Zwischenkreiskondensator 21 für alle Phasen des Schrittmotors gibt. Mittels eines Leistungsmessers 5, der unter gewissen Voraussetzungen ein einfacher Strommesser sein kann, wird die vom Schrittmotor 1 aufgenommene Wirkleistung P gemessen und deren zeitliches Verhalten in einer Auswerteeinheit 13 ausgewertet. Die Auswerteeinheit 13 enthält auch eine Zuführung einer Drehzahlvorgabe 14 Eingabe eines Sollwertes der Drehzahl R des Schrittmotors 1 und einen Umschalter zur Umschaltung zwischen zwei verschiedenen Methoden zur Bestimmung von Schrittverlusten je nach gemessener Veränderung der Drehzahl pro Zeiteinheit dR/dt. Je nach Drehzahl wird ein Analysator 16 zur Analyse der Wirkleistung P oder eine Einrichtung 6 zur Messung einer induzierten Gegenspannung Ug angesteuert. Die Einrichtung 6 ist mit einem Schwellwertschalter 17 verbunden. Wird von dem Schwellwertschalter 17 oder dem Analysator 16 ein Schrittverlust festgestellt, so wird ein Ausschalter 20 angesteuert, der über einen Schrittmotorcontroller 24 und die Endstufe 23 den Schrittmotor 1 abschaltet oder in eine definierte Position bringt.

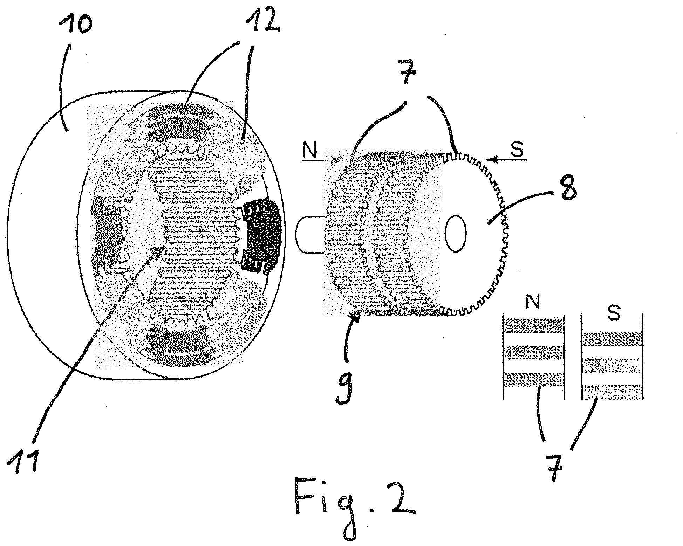

Fig. 2 zeigt schematisch den Aufbau eines Schrittmotors, wie er für die vorliegende Erfindung Anwendung finden kann. Innerhalb eines Stators 10 mit Magnetspulen 12 ist innerhalb von dessen Innenumfang 11 ein Permanentmagnetrotor 8 mit einer Vielzahl von magnetischen Polpaaren 7 angeordnet. Der Rotor ist an seinem Außenumfang 9 in an sich bekannter Weise gezähnt mit um eine Zahnbreite gegeneinander versetzten Zähnen der magnetischen Polpaare 7.

Das magnetische Statorfeld Hs welches durch den eingeprägten Strom der elektronischen Steuerung 3 des Schrittmotors 1 hervorgerufen wird, kann als sinusförmige Kurve dargestellt werden. Dabei ist zu beachten, dass eine elektrische Umdrehung des Permanentmagnetrotors 8 einer Periode des sinusförmigen Magnetfeldes Hs des Stators 10 entspricht. Die elektrische $\omega_{el}$ und die mechanische $\omega_{mech}$ Winkelgeschwindigkeit sind laut G1.1 über die Anzahl Zp der magnetischen Polpaare 7 des Schrittmotors 1 miteinander gekoppelt.

$$\omega_{mech} = \frac{\omega_{el}}{z_p} \qquad\qquad \text{G1.1}$$

Das bedeutet, dass bei einem Schrittmotor 1 mit 50 Polpaaren, also Zp = 50, für eine mechanische Umdrehung 50 elektrische Umdrehungen notwendig sind. Im Betrieb richtet sich das Rotorfeld nach dem Statorfeld aus, so dass die Zeiger beider Felder $H_S$ und $H_R$ im unbelasteten Fall in dieselbe Richtung zeigen. Der Winkel zwischen beiden Feldern, der als Polradwinkel $\vartheta$ bezeichnet wird beträgt 0°. Im Betriebsfall wenn sich im Luftspalt des Stators eine magnetische Wanderwelle ausprägt wird der Zeiger des Statorfeldes $H_S$ in einem statorbezogenen Koordinatensystem in eine Drehbewegung mit der Frequenz $\omega_{el}$ versetzt. Aufgrund der Interaktion zwischen dem Stator- und dem Rotorfeld wird der Zeiger $H_R$ ebenfalls in eine Drehbewegung mit der Frequenz $\omega_{el}$ versetzt wodurch eine Bewegung des gesamten Permanentmagnetrotor 8 stattfindet. Unter der theoretischen Vorraussetzung, dass auf den Schrittmotor 1 kein Lastmoment wirkt, wird der Polradwinkel $\vartheta$ den Wert von 0° beibehalten. Theoretisch betrachtet muss der Schrittmotor 1 für die Drehbewegung des Permanentmagnetrotors 8 ein Drehmoment von 0 Nm [Newtonmeter] aufbringen.

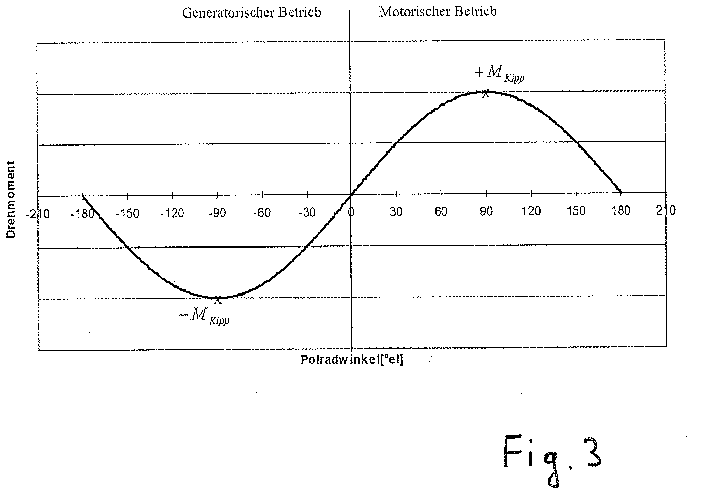

In Fig. 3 wird der Zusammenhang zwischen dem aufgebrachten Drehmoment des Schrittmotors 1 und dem Polradwinkel $\vartheta$ zwischen dem Stator- und dem Rotorfeld aufgezeigt. Mit steigendem Lastmoment erhöht sich der Polradwinkel $\vartheta$, wodurch das Drehmoment des Schrittmotors 1 erhöht wird. Im motorischen Betrieb eilt das Statorfeld dem Rotorfeld um den Betrag des Polradwinkels $\vartheta$ voraus. Im generatorischen Betrieb eilt das Rotorfeld dem Statorfeld voraus. Bei einem Polradwinkel von $\vartheta = 90°$ besitzt der Schrittmotor 1 sein maximales Drehmoment, das auch als Kippmoment $M_{Kipp}$ bezeichnet wird, die Magnetfeldzeiger $H_S$ und $H_R$ stehen dann senkrecht aufeinander. Wird das Lastmoment an diesem Punkt noch weiter erhöht kippt der Schrittmotor 1. Dieser Kippvorgang wird auch als Schrittverlust bezeichnet. Hierbei dreht sich das Statorfeld kontinuierlich weiter. Der Permanentmagnetrotor 8 kann diesem aber aufgrund des zu hohen Lastmomentes nicht mehr folgen. Als Resultat setzt eine Pendelbewegung des Permanentmagnetrotors 8 ein, bei der effektiv keine Drehbewegung mehr stattfindet. Problematisch ist dabei, dass die von der elektronischen Steuerung 3 vorgegebene Rotorposition nicht mehr mit der tatsächlichen Position des Permanentmagnetrotors 8 übereinstimmt. Diese Schwierigkeit wird meist mithilfe eines externen Gebers gelöst, der unabhängig von der elektronischen Steuerung die Rotorposition ermittelt und somit zur Detektion eines Schrittverlustes eingesetzt werden kann. In einigen Anwendungsfällen ist die Implementierung eines Gebers aus Kosten- oder auch Platzgründen jedoch nicht möglich. In diesen Fällen muss eine andere Lösung gefunden werden, die einen Schrittverlust des Schrittmotors 1 sicher detektiert.

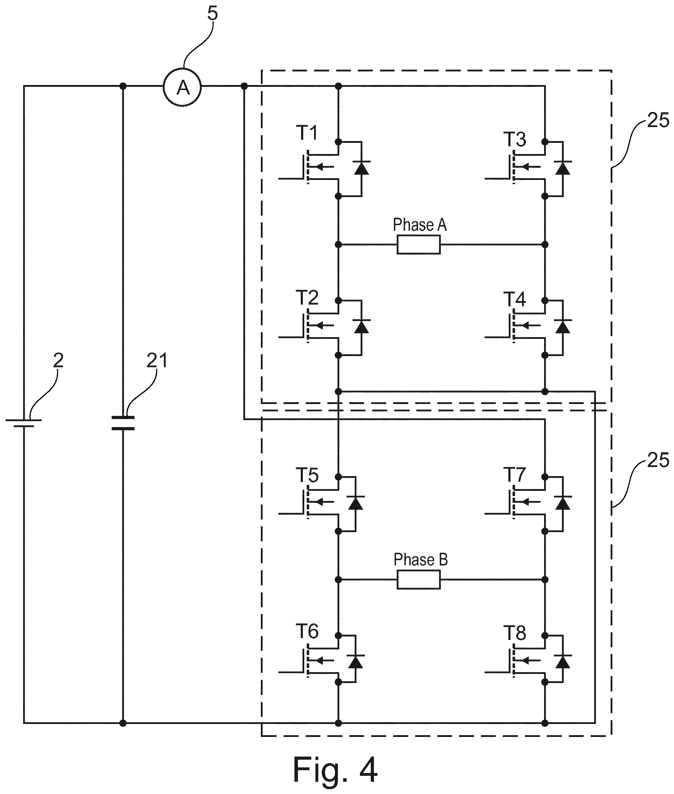

Das erfindungsgemäße Verfahren zur Erkennung eines Schrittverlustes bei Schrittmotoren, genannt dP/dt-Methode, erreicht dieses Ziel durch Auswertung der vom Schrittmotor 1 aufgenommenen Wirkleistung P. Für die Messung der Wirkleistung wird dabei der an sich bekannte klassische Aufbau einer Schrittmotorendstufe modifiziert (siehe Fig. 4).

Für gewöhnlich ist jeder sogenannten H-Brücke einer Endstufe 23 ein separater Zwischenkreiskondensator vorgeschaltet, der so nah wie möglich an die Transistoren angebunden wird. Für den Aufbau (siehe Fig. 4) zur Messung der Wirkleistung werden die beiden Kondensatoren im Summenpunkt der beiden Motorphasen A, B zu einem Zwischenkreiskondensator 21 zusammengefasst, der als Energiespeicher für beide H-Brücken 25 dient. Unter der Voraussetzung, dass die Spannung U im Zwischenkreis konstant ist, beschränkt sich die Aufnahme der Wirkleistung auf eine reine Strommessung, die hinter dem Zwischenkreiskondensator 21 realisiert wird (siehe G1.2).

$$p(t) = i(t) * u(t)$$

für $u(t) = U_{DC} = konst.$ folgt

$$p(t) = i(t) * U_{DC} \qquad \text{G1.2}$$

Bei unveränderter Magnetisierung ist der Blindleistungsanteil beider Phasen A, B an dieser Stelle konstant, weshalb Änderungen des Stromwertes reine Wirkleistungsänderungen darstellen. Ein großer Vorteil dieser Methode ist es, die Wirkleistung mehrphasiger Motoren mit nur einer Strommessung und ohne störende Pendelleistung bestimmen zu können. Die Wirkleistung setzt sich aus folgenden beiden Summanden nach G1.3 zusammen.

$$p_{ges}(t) = p_V(t) + p_M(t) \qquad \text{G1.3}$$

$p_V(t)$ steht dabei für die vom Schrittmotor 1 verursachte Verlustleistung und lässt sich, unter der Annahme, dass sich die Verluste größtenteils aus den Kupferverlusten der Motorwindungen zusammensetzen, mit G1.4 beschreiben.

$$p_V(t) = i_{PhaseA}(t)^2 * R_{Motorwindungen} + i_{PhaseB}(t)^2 * R_{Motorwindungen} \qquad \text{G1.4}$$

$p_M(t)$ beschreibt die vom Schrittmotor 1 an einer Welle abgegebene mechanische Wirkleistung, die beeinflusst wird durch die mechanische Winkelgeschwindigkeit $\omega_{mech}$ und das vom Schrittmotor 1 aufgebrachte Drehmoment M.

$$p_M(t) = M(t) * \omega_{mech} \qquad \text{G1.5}$$

Die Verlustleistung $p_V(t)$ kann in erster Näherung bei konstantem effektivem Phasenstrom (bei Stromeinprägung) auch als konstant angenommen werden. Die abgegebene Wirkleistung $p_M(t)$ ist im Normalbetrieb bei gleich bleibender Winkelgeschwindigkeit des Schrittmotors 1 und gleichbleibendem Lastmoment ebenfalls konstant. Im Falle eines Schrittverlustes steigen das Drehmoment M und der Polradwinkel $\vartheta$ des Schrittmotors 1 aufgrund der vorangegangenen Überlastung zunächst auf ihr Maximum an. Bei einer weiteren Steigerung des Lastmomentes kippt der Schrittmotor 1. Aufgrund der hohen Dynamik des Permanentmagnetrotors 8 verfällt dieser in eine Pendelbewegung, bei der sich die Winkelgeschwindigkeit $\omega_{mech}$ schnell zwischen einem gewissen Maximal- und Minimalwert ändert. Laut G1.5 bewirkt die Änderung des Motordrehmoments M(t) und der damit einhergehenden Variation der Winkelgeschwindigkeit $\omega_{mech}$ eine ausgeprägte Flanke im Signal der Wirkleistung $P_m$ welche mittels einer Auswerteeinheit 13, z. B. mittels eines Mikroprozessors, verarbeitet und ausgewertet werden kann.

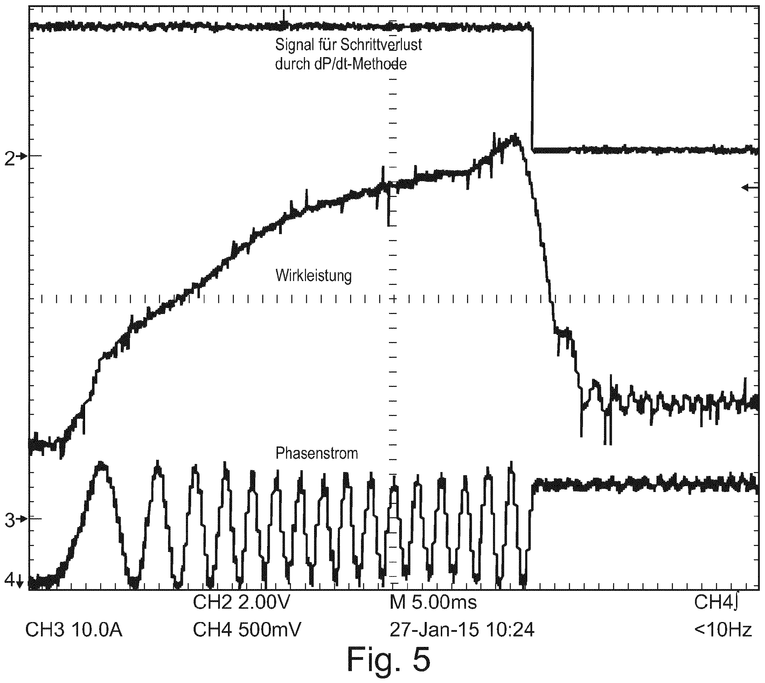

In Fig. 5 ist der Verlauf des Phasenstroms I und der Wirkleistung P für ein Fahrprofil dargestellt, bei dem der Schrittmotor 1 zunächst linear beschleunigt wird bis er seine maximale Drehzahl R erreicht hat. Anschließend bewegt sich der Permanentmagnetrotor 8 mit konstanter Drehzahl R. Vor Erreichen einer linearen Bremsphase wird der Schrittmotor 1 mechanisch überlastet, so dass ein Kippen stattfindet. Das Signal der Wirkleistung P wird durch die elektronische Steuerung 3 nach der dP/dt-Methode aufbereitet und an einen Auswerteeinheit 13 geleitet, wo es ausgewertet wird. Anhand der steilflankigen Änderung der Wirkleistung P wird ein Schrittverlust erkannt. Das obere Signal in Fig. 5 dient lediglich der Visualisierung eines Schrittverlustes, der durch die dP/dt-Methode erkannt wurde. Aus Fig. 5 wird ebenfalls deutlich, dass die Auswerteeinheit 13 bei Erkennen des Schrittverlustes den Phasenstrom des Schrittmotors 1 umgehend abschaltet. Bei einer Nichterkennung der Überlast, würden der Phasenstrom und das damit einhergehende magnetische Statorfeld fortgeführt.

Schwierigkeiten bei dieser Form der Überlasterkennung treten insbesondere in den Beschleunigungs- und Bremsphasen des Schrittmotors 1 auf, da sich auch hier aufgrund der Änderung der Winkelgeschwindigkeit starke Änderungen in der Wirkleistungsaufnahme erkennen lassen (siehe auch Fig. 5).

Eine weitere Methode zur Detektion eines Schrittverlustes ist daher die Auswertung der induzierten Gegenspannung Ug des Schrittmotors 1, genannt BEMF-Methode. Durch die Rotation des Permanentmagnetrotors 8 wird in den Statorwicklungen der Phasen A und B eine Spannung induziert, deren Amplitude ein Maß für die Drehzahl R des Schrittmotors 1 darstellt. Bei Einsatz eines handelsüblichen Schrittmotorcontrollers, z. B. mit der Bezeichnung "DRV8711" der Firma Texas Instruments, ist eine integrierte Auswertung der induzierten Gegenspannung Ug möglich, die hier als Schrittverlusterkennung verwendet wird. Als Auswertekriterium wird ein einstellbarer Schwellwert Umin definiert. Ein Unterschreiten der Gegenspannung Ug dieses Schwellwertes Umin wird als Schrittverlust interpretiert. Dieser ist von Anwendung zu Anwendung verschieden und muss dementsprechend angepasst werden. Im Folgenden wird beispielhaft die Vorgehensweise zur Messung der induzierten Gegenspannung Ug durch den Schrittmotorcontroller DRV8711 näher erläutert:

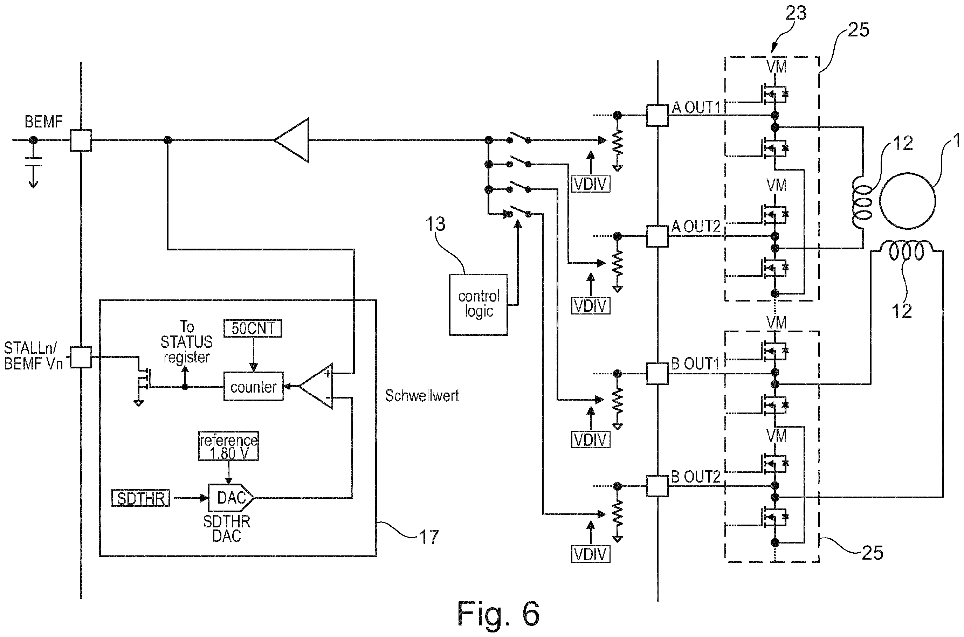

In Fig. 6 ist schematisch die Funktionsweise des Schrittmotorcontrollers DRV8711 zur Messung der induzierten Gegenspannung Ug dargestellt. Im rechten Teil ist eine Endstufe 23 mit zwei H-Brücken 25 abgebildet, die zum Betreiben des Schrittmotors 1 dienen. Der Schrittmotor 1 wird mit einem Permanentmagnetrotor 8 und zwei außen liegenden Magnetspulen 12 symbolisiert. Die Magnetspulen 12 stehen dabei für die Statorwicklungen der Phasen A und B. Die Ausgänge der H-Brücken 25 werden je nach Bestimmung auf die Pinne AOUT1/2 bzw. BOUT1/2 des Controllers geführt. Der mittlere Teil stellt den prinzipiellen Aufbau des DRV8711 zur "stall detection" dar.

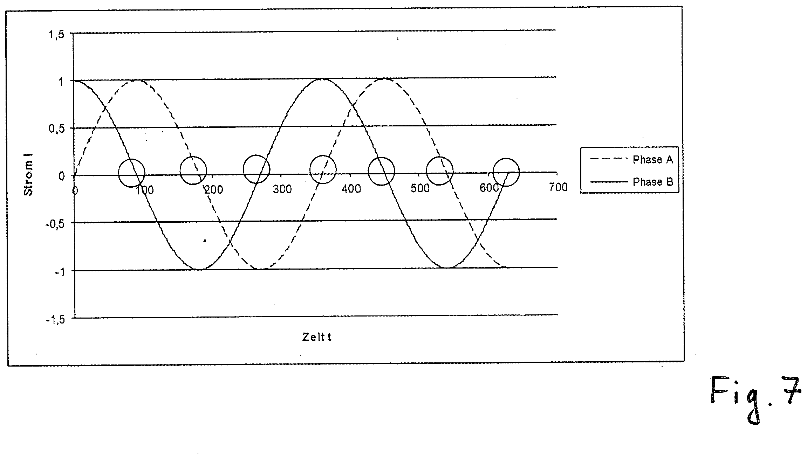

Da zur korrekten Ermittlung der Gegenspannung Ug der Strom in der zu messenden Phase vollständig abgebaut sein muss, wird eine Messung immer im stromlosen Zustand der Phasen A und B durchgeführt (siehe Fig. 7). Während des Stromflusses fällt über dem Ohmschen Widerstand der Spulenwicklung die Spannung

$$U_R = I * R_{Wicklung} \qquad\qquad Gl.6$$

ab. Ebenso bewirkt eine Veränderung des Stromflusses aufgrund der Induktivität der Spule eine Spannung von

$$U_L = L * \frac{di}{dt} \qquad\qquad Gl.7$$

wobei L die Induktivität, und $\frac{di}{dt}$ die Änderung des Stroms I pro Zeiteinheit darstellen. Die beiden Spannungsbeiträge $U_R$ und $U_L$ würden demnach die Messung der induzierten Gegenspannung Ug während eines Stromflusses durch die Magnetspule 12 verfälschen.

Um ein schnelles Abklingen des Stromes in der jeweiligen Phase A oder B zu gewährleisten, wird während des betreffenden Schrittes eine Seite der H-Brücke 25 der zugehörigen Phasenwicklung in einen hochimpedanten Zustand geschaltet (beide Transistoren werden geöffnet). Bei dem gegenüberliegenden Teil der H-Brücke wird der Low-Side-Transistor für die Dauer einer parametrierbaren Samplezeit eingeschaltet. Welcher Teil der H-Brücke 25 hochimpedant und welcher Teil low geschaltet wird hängt von der aktuellen Stromrichtung durch die Magnetspule 12 ab. Durch diese Schalterposition wird ein schnelles Abklingen des Phasenstroms über den geschalteten Low-Side-Transistor, die Bodydiode des High-Side-Transistors des gegenüberliegenden Teils der H-Brücke und die Versorgungsspannung VM erreicht. Die Spannung über der Spule $U_L + U_R$ (inklusive des ohmschen Widerstandes der Spule) erreicht dabei einen Wert, der der Summe aus der Versorgungsspannung VM und der Diodenspannung $U_D$ entspricht.

$$(U_L + U_R) = VM + U_D \qquad\qquad Gl.8$$

Für die Geschwindigkeit mit welcher der Phasenstrom abklingt gilt dabei:

- Je größer die Spulenspannung $U_L$ wird, desto schneller klingt der Strom ab.
- Je größer die Amplitude des Stroms zu Beginn ist, desto länger dauert es bis der Strom abgeklungen ist.
- Je größer die Induktivität der Spule ist, desto langsamer klingt der Strom ab.

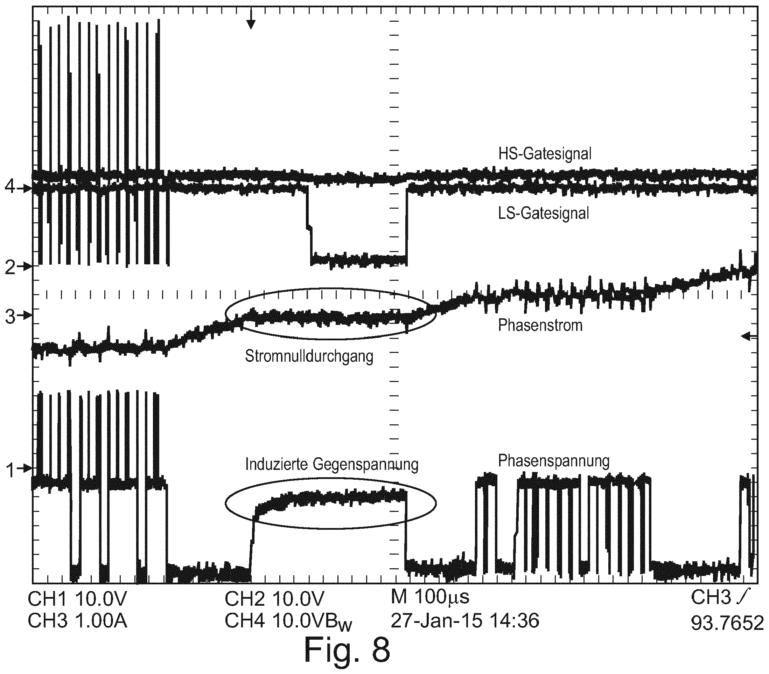

Die sich über der Spule einstellende Spannung wird nach Ablauf der eingestellten Samplezeit am Ausgang des hochimpedant geschalteten Teils der H-Brücke 25 mit Hilfe der Kontrolllogik des DRV8711 aufgenommen. Durch den geschalteten Low-Side-Transistor wird dabei ein Massebezug für die Messung hergestellt. Die Dauer der Samplezeit muss groß genug gewählt werden, dass ein Abklingen des Spulenstroms vor Ablauf der Samplezeit geschieht, aber klein genug um die Messung vor dem nächsten anstehenden Schritt des Schrittmotors 1 beendet zu haben (siehe Fig. 8). In der Beschleunigungs- und Bremsphase ist die Durchführung einer präzisen Messung möglich. Bei einem erkannten Schrittverlust wird der "Stall-Pin" des DRV8711 auf low gesetzt, so dass das Signal von einer übergeordneten Steuerung abgefragt werden kann.

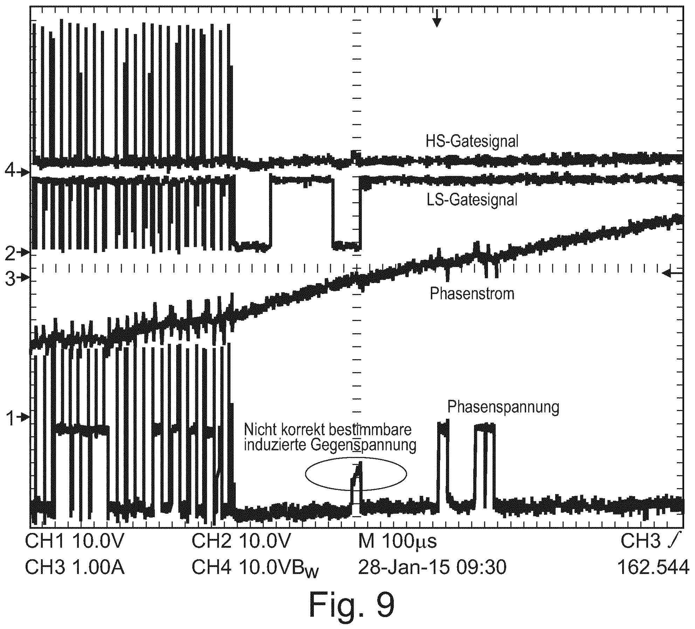

Bei hohen Drehzahlen und hoher Bestromung bzw. Belastung ist die Schrittfrequenz des Schrittmotors 1 allerdings so groß, dass die Samplezeit nicht ausreicht, um den Strom komplett abklingen zu lassen. Demnach ist eine einwandfreie Gegenspannungsmessung Ug in diesem Bereich nicht mehr möglich (siehe Fig. 9), wes halb bei einer solchen Betriebsart die DP/dt-Methode ergänzend angewandt wird.

Ein weiteres Problem ergibt sich zu Beginn der Beschleunigungsphasen und gegen Ende der Bremsphasen. Hier wird die Gegenspannung Ug aufgrund der niedrigen Drehzahl R des Permanentmagnetrotors 8 so gering, dass auch hier mit dieser Methode eine zuverlässige Schrittverlusterkennung nicht möglich ist.

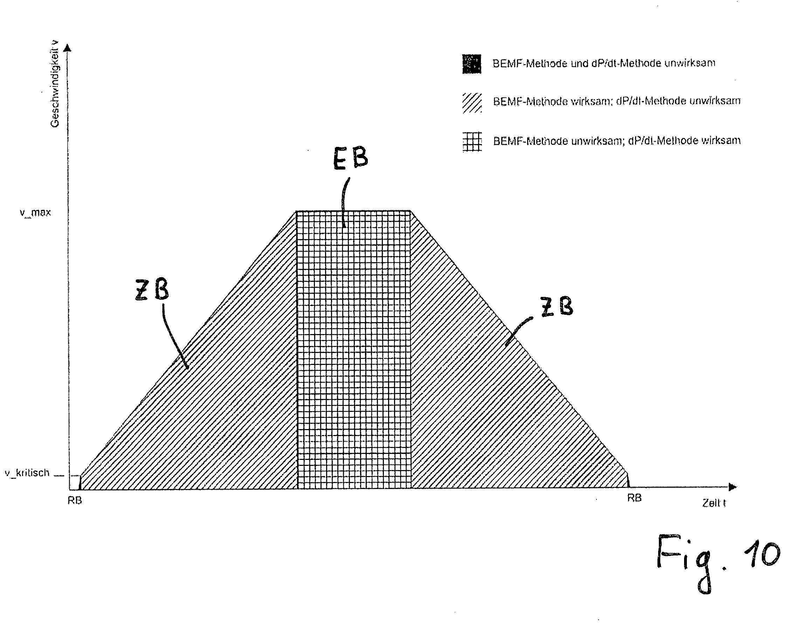

Um jedoch eine möglichst sichere Schrittverlusterkennung zu gewährleisten werden die beiden zuvor beschriebenen Auswertungsmethoden miteinander kombiniert. In Fig. 10 ist für ein typisches Bewegungsprofil des Schrittmotors 1 graphisch dargestellt, in welchen Bereichen die beiden Auswertungsmethoden angewendet werden. Die dP/dt-Methode findet ihre Anwendung, wenn der Schrittmotor 1 eine konstante Drehzahl R erreicht hat (mittlerer Bereich). Während der Beschleunigungs- und Bremsphasen ist diese Methode aufgrund der bereits erwähnten Problematiken abgeschaltet, weshalb dort die BEMF-Methode eingesetzt wird. Die BEMF-Methode ist jedoch eventuell bei sehr hohen Drehzahlen nicht mehr einsetzbar. Ihre Anwendung beschränkt sich daher für Systeme mit hoher Maximalgeschwindigkeit auf die Beschleunigungs- und die Bremsphasen des Schrittmotors 1. Wie in Fig. 10 zu erkennen gibt es jeweils am Anfang der Beschleunigungs- und am Ende der Bremsphase einen Bereich (Randbereich RB), in denen keine der genannten Methoden eingesetzt werden kann. Hier ist es nicht möglich einen Schrittverlust zu erkennen. Zur Reduzierung der Randbereiche ist es je nach System aber möglich, die Beschleunigung des Schrittmotors 1 in diesem Bereich zu erhöhen, um somit zeitlich gesehen einen Schrittverlust eher erkennen zu können.

Um die Betriebssicherheit des Systems weiter zu erhöhen, kann gemäß einer bevorzugten Ausführung der Erfindung für jeden Bewegungszyklus sichergestellt werden, dass die maximale Geschwindigkeit eines jeden Zyklus über einer kritischen Geschwindigkeit $v_{kritisch}$ liegt (siehe Fig. 10). Diese Vorgehensweise bietet folgende Vorteile: Zum einen wird auf diese Weise sicher ein klemmender Permanentmagnetrotor 8 erkannt (siehe ausführlicher Erläuterung unten). Zum anderen lässt sich ein wiederholt auftretender Schrittverlust nach Verlassen des Randbereiches feststellen, wohingegen er bei einer dauerhaften, aber mit Beschleunigungen verbundenen Unterschreitung der kritischen Geschwindigkeit $v_{kritisch}$ unerkannt bliebe.

Beim Übergang von der BEMF-Methode in die dP/dt-Methode gibt es je nach Größe der Maximalgeschwindigkeit $v_{max}$ ebenfalls Bereiche, in denen ein Schrittverlust nicht erkannt wird. Für große Maximalgeschwindigkeiten gelangt das System während der Beschleunigungsphase an einen Punkt, bei dem die Geschwindigkeit für eine korrekte Gegenspannungsmessung bereits zu groß ist. Da sich der Schrittmotor 1 aber noch in der Beschleunigungsphase befindet, ist die dP/dt-Methode möglicherweise noch nicht aktiv. Demnach bleibt ein Schrittverlust zunächst unbemerkt.

Ein bei hoher Geschwindigkeit auftretender Schrittverlust hat zur Folge, dass der Schrittmotor 1 "außer Tritt" gerät. Das heißt bei einmaligem Verlust der Synchronisation zwischen Rotor- und Statorfeld gelingt es dem Permanentmagnetrotor 8 nicht mehr, dem schnell umlaufenden Statorfeld zu folgen, so dass der Schrittmotor 1 keine Drehbewegung sondern lediglich eine undefinierte Pendelbewegung ausführt.

Sobald die Ansteuerelektronik in den Bereich konstanter Geschwindigkeit umschaltet, wird die dP/dt-Methode aktiviert. Aufgrund der sich durch den vorangegangenen Schrittverlust eingestellten Pendelbewegung des Permanentmagnetrotors 8, wird hier durch die dP/dt-Methode ein Fehler dennoch nachträglich erkannt. Analog dazu verhält es sich für den Bereich vom Übergang der dP/dt-Methode in die BEMF-Methode.

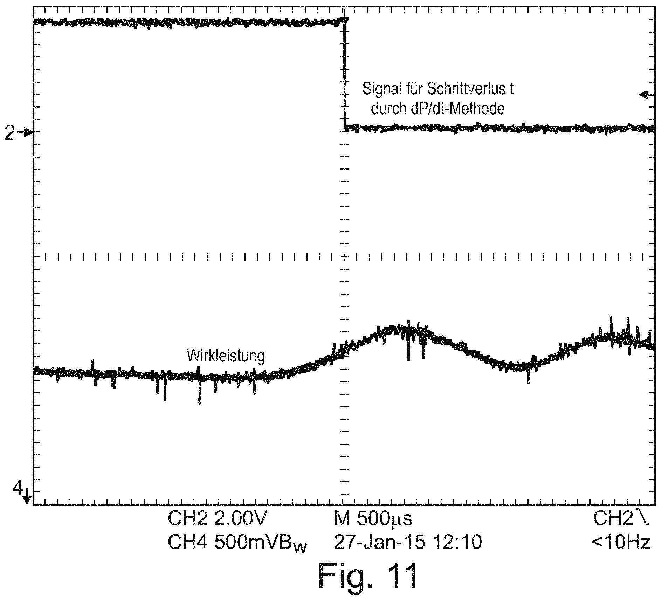

Nicht abgebildet ist in Fig. 10 die Problematik, wenn der bestromte Schrittmotor 1 ungewollt durch eine äußere Krafteinwirkung aus einer Ruhelage herausbewegt wird. Auch in diesem Fall findet ein Schrittverlust statt, da die elektronische Steuerung 3 nicht erkennen kann, in welche Richtung oder wie weit der Schrittmotor 1 bewegt wird. Die Erkennung auch dieser Überlastung des Schrittmotors 1 kann aber durch die dP/dt-Methode realisiert werden (siehe Fig. 11).

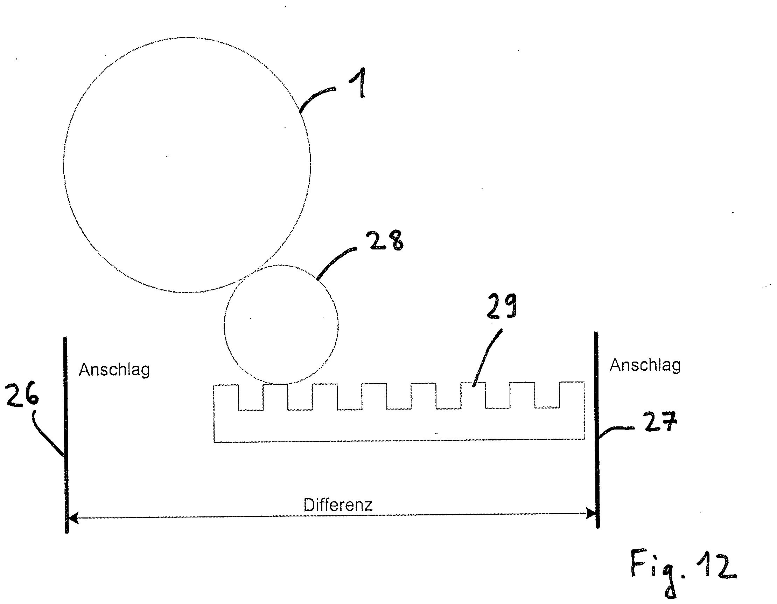

Einen Sonderfall bei der Schrittverlusterkennung stellt auch ein klemmender Permanentmagnetrotor 8 dar. Hierbei lässt sich der Schrittmotor 1 aufgrund einer Blockade nicht mehr bewegen, wodurch gleich zu Beginn eines Fahrbefehls ein Schrittverlust auftritt. Ein Blockieren ist immer dann gegeben, wenn das auf den Permanentmagnetrotor 8 einwirkende Lastmoment das maximal mögliche Anlaufmoment des Antriebs übersteigt (siehe Fig. 12). In diesem Fall ist ein Anlaufen des Schrittmotors 1 nicht mehr möglich.

Wie bereits anhand von Fig. 10 gezeigt gibt es im Verlauf eines Fahrprofils die Randbereiche RB, in denen eine Schrittverlusterkennung nicht möglich ist. Das bedeutet, dass ein klemmender Permanentmagnetrotor 8 nicht unmittelbar detektiert werden kann. Erst durch den Übergang vom Randbereich RB in die zweite Betriebsart ist es möglich, diesen Fehler mit Hilfe der BEMF-Methode, dank der fehlenden induzierten Gegenspannung Ug zu erkennen. Daraus folgt, dass es bei sehr kurzen Fahrprofilen, bei denen eine vorher definierte Mindestgeschwindigkeit dauerhaft unterschritten wird, nicht möglich ist, einen klemmenden Permanentmagnetrotor 8 oder einen anders gearteten Schrittverlust zu erfassen. Zur Vermeidung dieses Problems werden gemäß einem Ausführungsbeispiel der Erfindung ein Mindestweg und/oder eine Mindestgeschwindigkeit festgesetzt, die von keinem Fahrbefehl unterschritten werden dürfen.

Die Offenbarung ermöglicht auch eine sogenannte "Loseerkennung". Diese betrifft einen Wegmessvorgang, bei dem sich ein von einem Schrittmotor 1 betriebenes System zwischen einem ersten Bezugspunkt 26 und einem zweiten Bezugspunkt 27 befindet (siehe Fig. 12). Ziel ist es, die Position der beiden genannten Bezugspunkte 26, 27, welche zunächst als mechanische Anschläge angesehen werden können, zu bestimmen, um daraus die Distanz abzuleiten. Die Anschläge stellen für den Schrittmotor 1 ein sehr großes abrupt auftretendes Lastmoment dar, wohingegen der Bereich zwischen ihnen im Leerlauf durchfahren werden kann. Hierfür muss durch die Vorgabe eines geeigneten Sollstroms sichergestellt sein, dass das maximal mögliche Antriebsmoment in jedem Fall unterhalb des durch die Bezugspunkte 26, 27 hervorgerufenen Lastmoments liegt.

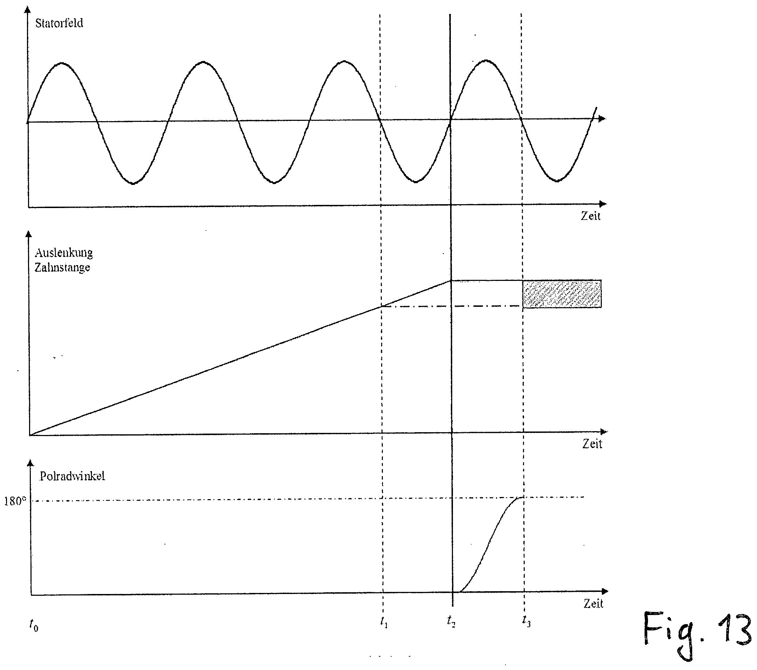

Im Folgenden soll der Ablauf eines Loseerkennungsverfahrens unter zu Hilfenahme von Fig. 13 näher erläutert werden.

In Fig. 13 ist im oberen Teil das sich an einem beliebigen fixen Ort im Luftspalt des Schrittmotors 1 ausbildende Magnetfeld über der Zeit t, im mittleren Teil die Auslenkung der Zahnstange über der Zeit t und im unteren Teil der sich ergebende Polradwinkel $\vartheta$ zwischen Stator- und Rotorfeld über der Zeit abgebildet. Wie bereits oben beschrieben folgt das Rotorfeld und damit auch der Permanentmagnetrotor 8 dem sinusförmigen Statorfeld. Die durch ein Getriebe, in Fig. 12 als Zahnrad 28 dargestellt, mit dem Permanentmagnetrotor 8 verbundene Zahnstange 29 verfährt ebenfalls synchron zum Statorfeld. Der Polradwinkel $\vartheta$ wird zunächst aufgrund eines idealen Leerlaufs des Systems zu Null angenommen. Zu Beginn einer Loseerkennung wird der Schrittmotor 1 bzw. die Zahnstange 29 zunächst in die Richtung eines Anschlags verfahren (sihe Fig. 12). Das durch den eingeprägten Strom hervorgerufene sinusförmige Statorfeld habe dabei eine konstante Frequenz. Das hat zur Folge, dass sich die Zahnstange 29 mit einer konstanten Geschwindigkeit bewegt, wodurch sich, wie in Fig. 13 dargestellt, eine linear ansteigende Auslenkung der Zahnstange 29 über der Zeit t ergibt (Zeitpunkt $t_0$ bis $t_2$). Zum Zeitpunkt $t_2$ erreicht die Zahnstange 29 den mechanischen Anschlag, wodurch eine Weiterbewegung nicht mehr möglich ist. Ebenso ist der Permanentmagnetrotor 8 in dieser Position festgesetzt, was dazu führt, dass das Rotorfeld dem sich kontinuierlich weiter bewegenden Statorfeld nicht mehr folgen kann. Aufgrund dessen steigt der Polradwinkel $\vartheta$ in der Zeit zwischen $t_2$ und $t_3$ bis zu einem maximalen Wert von 180° an. In diesem Bereich bildet der Schrittmotor 1 ein Drehmoment aus, das in Richtung des Anschlags gerichtet ist. Ab dem Zeitpunkt $t_3$ kehrt sich das Drehmoment um. Der Permanentmagnetrotor 8 bzw. die Zahnstange 29 wird von dem Anschlag weg in eine nicht genau definierbare Position bewegt, die sich zwischen $0^\circ_{el}$ und $180^\circ_{el}$ vor dem Anschlag befindet. Bei einer exakten Detektion der Ruckbewegung des Permanentmagnetrotors 8 durch die dP/dt-Methode zum Zeitpunkt $t_3 + \Delta t$ und einem unmittelbaren Stoppen des Verlaufs des eingeprägten Stroms bzw. des Statorfeldes zu diesem Zeitpunkt (siehe Abbildung 19), pendelt sich der Permanentmagnetrotor 8 in eine Position ein, die sich $180^\circ_{el}$ vor dem Anschlag befindet. Der Permanentmagnetrotor 8 bzw. die Zahnstange 29 wird nun vom angelegten Statorfeld in dieser Position gehalten. Zur Ermittlung der Differenz zwischen beiden Anschlägen wird der Schrittmotor 1 von diesem Punkt ausgehend mit demselben Verfahren gegen den anderen Anschlag bewegt. Dabei werden die zurückgelegten Schritte des Schrittmotors 1 gezählt, die ein Maß für die Distanz zwischen der Bezugspunkte 26, 27 darstellen.

Die vorliegende Erfindung mit ihren hier beschriebenen Varianten und Anwendungsmöglichkeiten erlaubt es, eine Steuerung mit integrierter Schrittverlusterkennung bereitzustellen, die für verschiedene Betriebsarten zuverlässig und schnell Lastüberschreitungen erkennt und geeignete Maßnahmen bewirkt. Dies ist insbesondere für die Anwendung bei Ventilsteuerungen von Vorteil, kann aber auch in anderen Antriebssystemen genutzt werden.

**Bezugszeichenliste**

| | |
|---|---|
| 1 | Schrittmotor |
| 2 | Versorgungsquelle |
| 3 | Elektronische Steuerung |
| 4 | Vorrichtung zur Detektion eines Schrittverlustes |
| 5 | Leistungsmesser |
| 6 | Einrichtung zur Messung einer induzierten Gegenspannung |
| 7 | Magnetische Poolpaare |
| 8 | Permanentmagnetrotor |
| 9 | Außenumfang des Permanentmagnetrotors |
| 10 | Stator |
| 11 | Innenumfang des Stators |
| 12 | Magnetspulen |
| 13 | Auswerteeinheit |
| 14 | Drehzahlvorgabe |
| 15 | Umschalter |
| 16 | Analysator |
| 17 | Schwellwertschalter |
| 20 | Ausschalter |
| 21 | Zwischenkreiskondensator |
| 22 | Zwischenkreis |
| 23 | Endstufe |
| 24 | Schrittmotorcontroller |
| 25 | H-Brücke |
| 26 | erster Bezugspunkt |
| 27 | zweiter Bezugspunkt |
| 28 | Zahnrad |
| 29 | Zahnstange |
| P | Wirkleistung |
| t | Zeit |
| dP/dt | zeitlicher Verlauf der Wirkleistung |
| Ug | Gegenspannung |
| R | Drehzahl |
| Rmax | Drehzahlschwelle |
| dR/dt | zeitlicher Verlauf der Drehzahl |
| Umin | Schwellwert |
| RB | Randbereich |
| EB | erste Betriebsart |
| ZB | zweite Betriebsart |
| Hs | magnetisches Statorfeld |
| U | Zwischenkreisspannung |
| I | Strom |
| X | Markierung |
| M | Drehmoment |
| $M_{Kipp}$ | Kippmoment |
| $\vartheta$ | Polradwinkel |

**Patentansprüche**

1. Verfahren zur elektronischen Detektion eines Schrittverlustes bei einem Schrittmotor (1) mit einer elektronischen Steuerung (3), wobei das zeitliche Verhalten der Wirkleistung (dP/dt), die der Schrittmotor (1) von einer Versorgungsquelle (2) bezieht, gemessen und auf ein charakteristisches Verhalten bei einem Schrittverlust überwacht wird, und wobei die Wirkleistung (P) aus einer gemeinsamen Strommessung (5) an einer Endstufe (23) der elektronischen Steuerung (3) für alle Phasen (A, B) ermittelt wird.

**2.** Verfahren nach Anspruch 1, wobei die Endstufe (23) einen gemeinsamen Zwischenkreiskondensator (21) parallel zur Versorgungsquelle (2) für alle Phasen (A, B) aufweist und der Strom (I) von diesem zum Schrittmotor (1) gemessen und dessen zeitliches Verhalten analysiert wird, insbesondere ein zeitlicher Verlauf der Wirkleistung (dP/dt) auf ein typisches Verhalten für einen Schrittverlust überwacht wird.

**3.** Verfahren nach Anspruch 1 oder 2 zur elektronischen Detektion eines Schrittverlustes bei einem Schrittmotor (1) bei verschiedenen Betriebsarten (EB, ZB) mit folgenden Verfahrensschritten:

a. Einteilung des Betriebs des Schrittmotors (1) in mindestens zwei Betriebsarten, nämlich eine erste Betriebsart (EB) mit einer im Wesentlichen konstanten Drehzahl (R), und eine zweite Betriebsart (ZB) mit zunehmender oder abnehmender Drehzahl (R), und Ermittlung, ob sich der Schrittmotor (1) in einer der Betriebsarten (EB, ZB) befindet;
b. Feststellung des Auftretens eines Schrittverlustes in der ersten Betriebsart (EB) durch Überwachung der Wirkleistung (P) auf ein für einen Schrittverlust charakteristisches zeitliches Verhalten (dP/dt), die der Schrittmotor (1) von einer Versorgungsquelle (2) bezieht;
c. Feststellung des Auftretens eines Schrittverlustes in der zweiten Betriebsart (ZB) durch Überwachung einer in dem Schrittmotor (1) induzierten Gegenspannung (Ug).

**4.** Verfahren nach Anspruch 3, wobei der Schrittmotor (1) ein zwei-phasiger Hybrid-Schrittmotor ist mit einer Vielzahl, insbesondere mehr als 20, magnetischer Polpaare (7) am Außenumfang (9) eines Permanentmagnetrotors (8) umgeben von einem Stator (10) mit einer geraden Anzahl von Magnetspulen (12), insbesondere 6 bis 12, und wobei in der ersten Betriebsart (EB) ein zeitlicher Verlauf der Wirkleistung (dP/dt) auf ein charakteristisches Verhalten für einen Schrittverlust überwacht wird und in der zweiten Betriebsart (ZB) die induzierte Gegenspannung (Ug) auf das Unterschreiten eines Schwellwertes (Umin) als Signal für einen Schrittverlust überwacht wird.

**5.** Verfahren nach einem der Ansprüche 3 oder 4, wobei das zeitliche Verhalten der Drehzahl (dR/dt) zur Unterscheidung der Betriebsarten (EB, ZB) aus einer Amplitude der induzierten Gegenspannung (Ug) und/oder aus Steuersignalen für den Schrittmotor (1) gewonnen wird.

**6.** Verfahren nach einem der Ansprüche 3 bis 5, wobei in einer Auswerteeinheit (13) zunächst ermittelt wird, ob sich der Schrittmotor (1) in einer der beiden Betriebsarten (EB, ZB) befindet, wobei dann je nach festgestellter Betriebsart (EB, ZB) die zugehörige Art der Überwachung eingeschaltet und die jeweils andere abgeschaltet wird, wobei bei der Feststellung eines Schrittverlustes der Schrittmotor (1) angehalten oder in einen vorgebbaren Zustand gebracht wird.

**7.** Verfahren nach einem der vorhergehenden Ansprüche, wobei zusätzlich auch bei elektronisch im Stillstand gehaltenem Schrittmotor (1) die Wirkleistung (P) überwacht wird, um einen Schrittverlust durch eine externe Einwirkung feststellen zu können.

**8.** Verfahren nach einem der vorhergehenden Ansprüche, wobei der Schrittmotor (1) so gesteuert wird, dass er bei jeder Bewegung eine Mindestgeschwindigkeit erreicht oder einen Mindestweg zurücklegt, vorzugsweise auch eine Maximalgeschwindigkeit nicht überschritten wird.

**9.** Verfahren nach einem der vorhergehenden Ansprüche, wobei der Abstand zwischen einem ersten (26) und einem zweiten (27) die Bewegung des Schrittmotors (1) hemmenden Bezugspunkten durch hin und her Verfahren des Schrittmotors (1) in Richtung der Bezugspunkte (26, 27) bis zu einem jeweiligen Schrittverlust und Zählen der Schritte zwischen den zwei gemessenen Schrittverlusten an den Hindernissen (26, 27) gemessen wird.

**10.** Elektronische Steuerung (3) eines Schrittmotors (1), die elektronische Steuerung (3) umfasst eine Vorrichtung (4) zur Detektion eines Schrittverlustes bei einem von der Steuerung steuerbaren Schrittmotor (1) mit folgenden Merkmalen:

a. Die elektronische Steuerung (3) ist mit einer Versorgungsquelle (2) verbindbar und weist einen Leistungsmesser (5) auf zur Messung der von dem Schrittmotor (1) aus der Versorgungsquelle (2) aufgenommenen Wirkleistung (P);
b. Die elektronische Steuerung weist eine Endstufe (23) mit nur einem gemeinsamen Zwischenkreiskondensator (21) für alle Phasen (A, B) wobei der Leistungsmesser (5) einen zwischen Zwischenkreiskondensator (21) und Schrittmotor (1) angeordneten Strommesser umfasst, wobei der Leistungsmesser (5) zur Überwachung der Wirkleistung (P) einen Analysator (16) zur Erkennung eines für den Schrittverlust typischen Signalverlaufes der Wirkleistung (P) umfasst.

11. Elektronische Steuerung (3) eines Schrittmotors (1) nach Anspruch 10 mit folgenden weiteren Merkmalen:

    c. Die elektronische Steuerung (3) weist eine Einrichtung (6) zur Messung einer in dem Schrittmotor (1) induzierten Gegenspannung (Ug) auf;
    d. Die elektronische Steuerung (3) enthält eine Auswerteeinheit (13), die bei einer ersten Betriebsart mit einer im Wesentlichen konstanten Drehzahl (R), aus einer Überwachung der Wirkleistung (P) und bei einer zweiten Betriebsart mit zunehmender oder abnehmender Drehzahl (R) aus einer Überwachung der induzierten Gegenspannung (Ug) einen Schrittverlust erkennen kann.

12. Elektronische Steuerung (3) nach Anspruch 11, wobei die Steuerung (3) für einen zwei-phasigen Schrittmotor (1), insbesondere einen Hybrid-Schrittmotor mit einer Vielzahl von magnetischen Polpaaren (7) am Außenumfang (9) eines Permanentmagnetrotors (8) umgeben von am Innenumfang (11) eines Stators (10) mit einer geraden Anzahl von Magnetspulen (12), ausgelegt ist.

13. Elektronische Steuerung nach Anspruch 11 oder 12, wobei die Auswerteeinheit (13) mit einer Drehzahlvorgabe (14) zur Eingabe der Drehzahl (R) verbunden ist und eine Messeinheit zur Messung der Änderung der Drehzahl (R) pro Zeiteinheit (dR/dt) aufweist und einen Umschalter (15) zur Umschaltung von der Überwachung der Wirkleistung (P) zur Überwachung der induzierten Gegenspannung (Ug) in Abhängigkeit von der Änderung der Drehzahl (R) pro Zeiteinheit (dR/dt).

14. Elektronische Steuerung (3) nach einem der Ansprüche 10 bis 13, wobei der Analysator (16) zur Erkennung eines für einen Schrittverlust typischen Signalverlaufes, nämlich eines signifikanten Abfalls der Wirkleistung (P) pro Periode eines Phasenstroms, ausgebildet ist und wobei ein Ausschalter (20) zur sofortigen Abschaltung des Phasenstroms bei Erkennung eines Schrittverlustes vorhanden ist.

15. Elektronische Steuerung (3) nach einem der Ansprüche 10 bis 14, wobei die Einrichtung zur Messung der induzierten Gegenspannung (Ug) einen Schwellwertschalter (17) aufweist zur Erkennung einer Unterschreitung eines vorgebbaren Schwellwertes (Umin) durch die induzierte Gegenspannung (Ug) bei einem Nulldurchgang eines Phasenstroms als Hinweis auf einen Schrittverlust und wobei ein Ausschalter (20) zur sofortigen Abschaltung des Phasenstroms bei Erkennung eines Schrittverlustes vorhanden ist.

## Claims

1. Method for the electronic detection of step loss in a stepper motor (1) having an electronic controller (3), wherein the temporal behaviour of the active power (dP/dt) that the stepper motor (1) draws from a power source (2) is measured and monitored for characteristic behaviour in the event of step loss, and wherein the active power (P) is determined from a common current measurement (5) at an output stage (23) of the electronic controller (3) for all of the phases (A, B).

2. Method according to Claim 1, wherein the output stage (23) has a common intermediate circuit capacitor (21) in parallel with the power source (2) for all of the phases (A, B) and the current (I) therefrom to the stepper motor (1) is measured and its temporal behaviour is analysed, in particular a temporal profile of the active power (dP/dt) is monitored for typical behaviour for step loss.

3. Method according to Claim 1 or 2 for the electronic detection of step loss in a stepper motor (1) in different types of operation (EB, ZB), having the following method steps:

    a. dividing the operation of the stepper motor (1) into at least two types of operation, specifically a first type of operation (EB) with a substantially constant rotational speed (R) and a second type of operation (ZB) with an increasing or decreasing rotational speed (R), and determining whether the stepper motor (1) is in one of the types of operation (EB, ZB),
    b. identifying the occurrence of step loss in the first type of operation (EB) by monitoring the active power (P), drawn by the stepper motor (1) from a power source (2), for temporal behaviour (dP/dt) characteristic of step loss;
    c. identifying the occurrence of step loss in the second type of operation (ZB) by monitoring a counter-voltage (Ug) induced in the stepper motor (1).

4. Method according to Claim 3, wherein the stepper motor (1) is a two-phase hybrid stepper motor having a multiplicity of, in particular more than 20, magnetic pole pairs (7) on the outer circumference (9) of a permanent magnet rotor (8) surrounded by a stator (10) having an even number of magnetic coils (12), in particular 6 to 12, and wherein, in the first type of operation (EB), a temporal profile of the active power (dP/dt) is monitored for characteristic behaviour for step loss and, in the second type of operation (ZB), the induced counter-voltage (Ug) is monitored with regard to falling below a threshold value (Umin) as a signal for step loss.

5. Method according to either of Claims 3 and 4, wherein the temporal behaviour of the rotational speed (dR/dt) is obtained from an amplitude of the induced counter-voltage (Ug) and/or from control signals for the stepper motor (1) in order to distinguish between the types of operation (EB, ZB).

6. Method according to one of Claims 3 to 5, wherein it is initially determined in an evaluation unit (13) whether the stepper motor (1) is in one of the two types of operation (EB, ZB), wherein, depending on the identified type of operation (EB, ZB), the associated type of monitoring is then activated and the respective other type is deactivated, wherein, when step loss is identified, the stepper motor (1) is stopped or put into a specifiable state.

7. Method according to one of the preceding claims, wherein the active power (P) is additionally also monitored when the stepper motor (1) is kept electronically at a standstill in order to be able to identify step loss caused by an external influence.

8. Method according to one of the preceding claims, wherein the stepper motor (1) is controlled such that, at each movement, it reaches a minimum speed or covers a minimum distance, and a maximum speed is preferably also not exceeded.

9. Method according to one of the preceding claims, wherein the distance between a first (26) and a second (27) reference point that limit the movement of the stepper motor (1) is measured by moving the stepper motor (1) back and forth in the direction of the reference points (26, 27) until respective step loss occurs and counting the steps between the two measured step losses at the obstacles (26, 27).

10. Electronic controller (3) of a stepper motor (1), the electronic controller (3) comprising a device (4) for detecting step loss in a stepper motor (1) able to be controlled by the controller, having the following features:

   a. the electronic controller (3) is able to be connected to a power source (2) and has a power meter (5) for measuring the active power (P) consumed from the power source (2) by the stepper motor (1);
   b. the electronic controller has an output stage (23) having just one common intermediate circuit capacitor (21) for all of the phases (A, B), wherein the power meter (5) comprises an ammeter arranged between the intermediate circuit capacitor (21) and the stepper motor (1), wherein the power meter (5), in order to monitor the active power (P), comprises an analyser (16) for detecting a signal profile of the active power (P) that is typical for step loss.

11. Electronic controller (3) of a stepper motor (1) according to Claim 10, having the following further features:

   c. the electronic controller (3) has an apparatus (6) for measuring a counter-voltage (Ug) induced in the stepper motor (1),
   d. the electronic controller (3) contains an evaluation unit (13) that is able to detect step loss, in a first type of operation with a substantially constant rotational speed (R), from monitoring the active power (P) and, in a second type of operation with increasing or decreasing rotational speed (R), from monitoring the induced counter-voltage (Ug).

12. Electronic controller (3) according to Claim 11, wherein the controller (3) is designed for a two-phase stepper motor (1), in particular a hybrid stepper motor having a multiplicity of magnetic pole pairs (7) on the outer circumference (9) of a permanent magnet motor (8) surrounded by the inner circumference (11) of a stator (10) having an even number of magnetic coils (12).

13. Electronic controller according to Claim 11 or 12, wherein the evaluation unit (13) is connected to a rotational speed specification (14) for inputting the rotational speed (R) and has a measurement unit for measuring the change in rotational speed (R) per time unit (dR/dt) and a changeover switch (15) for changing over from monitoring the active power (P) to monitoring the induced counter-voltage (Ug) depending on the change in the rotational speed (R) per time unit (dR/dt).

14. Electronic controller (3) according to one of Claims 10 to 13, wherein the analyser (16) is designed to detect a signal profile typical for step loss, specifically a significant drop in the active power (P) per period of a phase current, and wherein a deactivator (20) is present in order to immediately deactivate the phase current when step loss is identified.

15. Electronic controller (3) according to one of Claims 10 to 14, wherein the apparatus for measuring the induced counter-voltage (Ug) has a threshold value switch (17) for detecting the induced counter-voltage (Ug) falling below a specifiable threshold value (Umin) at a zero crossing of a phase current as an indication of step loss, and wherein a deactivator (20) is present in order to immediately deactivate the phase current when step loss is identified.

## Revendications

1. Procédé de détection électronique d'une perte de pas dans un moteur pas à pas (1) comportant une commande électronique (3), dans lequel la réponse temporelle de la puissance active (dP/dt) que le moteur pas à pas (1) obtient d'une source d'alimentation (2) est mesurée et est surveillée en ce qui concerne une réponse caractéristique lors d'une perte de pas, et dans lequel la puissance active (P) est déterminée pour toutes les phases (A, B) à partir d'une mesure de courant commune (5) au niveau d'un étage de sortie (23) de la commande électronique (3).

2. Procédé selon la revendication 1, dans lequel l'étage de sortie (23) comporte pour toutes les phases (A, B) un condensateur de circuit intermédiaire commun (21) en parallèle avec la source d'alimentation (2) et le courant (I) allant de celui-ci au moteur pas à pas (1) est mesuré et sa réponse temporelle est analysée, en particulier une variation temporelle de la puissance active (dP/dt) est surveillée en ce qui concerne un comportement typique d'une perte de pas.

3. Procédé selon la revendication 1 ou 2 de détection électronique d'une perte de pas dans un moteur pas à pas (1) dans différents modes de fonctionnement (EB, ZB), comprenant les étapes de procédé suivantes:

   a. classer le fonctionnement du moteur pas à pas (1) en au moins deux modes de fonctionnement, à savoir un premier mode de fonctionnement (EB) avec une vitesse de rotation sensiblement constante (R), et un second mode de fonctionnement (ZB) avec une vitesse de rotation croissante ou décroissante (R), et déterminer si le moteur pas à pas (1) se trouve dans l'un desdits modes de fonctionnement (EB, ZB) ;
   b. détecter l'apparition d'une perte de pas dans le premier mode de fonctionnement (EB) en surveillant la puissance active (P) en ce qui concerne une réponse temporelle (dP/dt) caractéristique d'une perte de pas, que le moteur pas à pas (1) obtient d'une source d'alimentation (2) ;
   c. détecter l'apparition d'une perte de pas dans le second mode de fonctionnement (ZB) en surveillant une tension antagoniste (Ug) induite dans le moteur pas à pas (1).

4. Procédé selon la revendication 3, dans lequel le moteur pas à pas (1) est un moteur pas à pas hybride biphasé comportant une pluralité, en particulier plus de 20, de paires de pôles magnétiques (7) sur la circonférence extérieure (9) d'un rotor à aimant permanent (8) entouré par un stator (10) comportant un nombre pair de bobines magnétiques (12), en particulier de 6 à 12, et dans lequel, dans le premier mode de fonctionnement (EB), une variation temporelle de la puissance active (dP/dt) est surveillée en ce qui concerne une réponse caractéristique d'une perte de pas et, dans le second mode de fonctionnement (ZB), la tension antagoniste induite (Ug) est surveillée en ce qui concerne un abaissement en dessous d'une valeur de seuil (Umin) en tant que signal pour une perte de pas.

5. Procédé selon l'une des revendications 3 ou 4, dans lequel la réponse temporelle de la vitesse de rotation (dR/dt) est obtenue à partir d'une amplitude de la tension antagoniste induite (Ug) et/ou de signaux de commande destinés au moteur pas à pas (1) afin de distinguer les modes de fonctionnement (EB, ZB).

6. Procédé selon l'une des revendications 3 à 5, dans lequel une unité d'évaluation (13) détermine d'abord si le moteur pas à pas (1) se trouve dans l'un des deux modes de fonctionnement (EB, ZB), dans lequel, selon le mode de fonctionnement détecté (EB, ZB), le type de surveillance correspondant est alors activé et l'autre est respectivement désactivé, dans lequel, lorsqu'une perte de pas est détectée, le moteur pas à pas (1) est arrêté ou mis dans un état prédéterminé.

7. Procédé selon l'une des revendications précédentes, dans lequel la puissance active (P) est en outre également surveillée lorsque le moteur pas à pas (1) est électroniquement maintenu à l'arrêt, afin de pouvoir détecter une perte de pas due à une influence extérieure.

8. Procédé selon l'une des revendications précédentes, dans lequel le moteur pas à pas (1) est commandé de manière à ce qu'il atteigne une vitesse minimale ou couvre une course minimale à chaque mouvement, et de préférence également, à ce qu'une vitesse maximale ne soit pas dépassée.

9. Procédé selon l'une des revendications précédentes, dans lequel la distance entre un premier (26) et un second (27) points de référence empêchant le mouvement du moteur pas à pas (1) est mesurée en déplaçant le moteur pas à pas (1) en avant et en arrière dans la direction des points de référence (26, 27) jusqu'à ce qu'une perte de pas respective soit atteinte et en comptant les pas entre les deux pertes de pas mesurées au niveau des obstacles (26, 27).

10. Commande électronique (3) d'un moteur pas à pas (1), la commande électronique (3) comprenant un dispositif (4) destiné à détecter une perte de pas dans un moteur pas à pas (1) pouvant être commandé par la commande, présentant les caractéristiques suivantes :

    a. la commande électronique (3) peut être reliée à une source d'alimentation (2) et comporte un dispositif de mesure de puissance (5) permettant de mesurer la puissance active (P) consommée par le moteur pas à pas (1) à partir de la source d'alimentation (2) ;
    b. la commande électronique possède un étage de sortie (23) ne comportant qu'un seul condensateur de circuit intermédiaire (21) pour toutes les phases (A, B), dans lequel le dispositif de mesure de puissance (5) comprend un dispositif de mesure de courant disposé entre le condensateur de circuit intermédiaire (21) et le moteur pas à pas (1), dans lequel, pour surveiller la puissance active (P), le dispositif de mesure de puissance (5) comprend un analyseur (16) destiné à détecter une variation de signal de la puissance active (P) qui est typique de la perte de pas.

11. Commande électronique (3) d'un moteur pas à pas (1) selon la revendication 10, présentant les caractéristiques supplémentaires suivantes:

    c. la commande électronique (3) comporte un dispositif (6) destiné à mesurer une tension antagoniste (Ug) induite dans le moteur pas à pas (1) ;
    d. la commande électronique (3) comporte une unité d'évaluation (13) qui peut détecter une perte de pas dans un premier mode de fonctionnement avec une vitesse de rotation sensiblement constante (R) à partir d'une surveillance de la puissance active (P) et dans un second mode de fonctionnement avec une vitesse de rotation (R) croissante ou décroissante de à partir de la surveillance de la tension antagoniste induite (Ug).

12. Commande électronique (3) selon la revendication 11, dans laquelle la commande (3) est conçue pour un moteur pas à pas biphasé (1), en particulier un moteur pas à pas hybride comportant une pluralité de paires de pôles magnétiques (7) sur la circonférence extérieure (9) d'un rotor à aimant permanent (8), entouré, sur la circonférence intérieure (11), d'un stator (10) comportant un nombre pair de bobines magnétiques (12).

13. Commande électronique selon la revendication 11 ou 12, dans laquelle l'unité d'évaluation (13) est reliée à un dispositif de préréglage de vitesse de rotation (14) pour la fourniture en entrée de la vitesse de rotation (R) et comprend une unité de mesure pour la mesure de la variation de la vitesse de rotation (R) par unité de temps (dR/dt) et un commutateur (15) permettant de basculer de la surveillance de la puissance active (P) à la surveillance de la tension antagoniste induite (Ug) en fonction de la variation de la vitesse de rotation (R) par unité de temps (dR/dt).

14. Commande électronique (3) selon l'une des revendications 10 à 13, dans laquelle l'analyseur (16) est conçu pour détecter une variation de signal typique d'une perte de pas, à savoir une diminution significative de la puissance active (P) par période d'un courant de phase, et dans lequel il est prévu un disjoncteur (20) permettant l'interruption immédiate du courant de phase lorsqu'une perte de pas est détectée.

15. Commande électronique (3) selon l'une des revendications 10 à 14, dans laquelle le dispositif de mesure de la tension antagoniste induite (Ug) comporte un commutateur de valeur de seuil (17) destiné à détecter, en tant qu'indication d'une perte de pas, un abaissement de la tension antagoniste induite (Ug) en dessous d'une valeur de seuil prédéfinissable (Umin) lors d'un passage par zéro d'un courant de phase et dans laquelle il est prévu un disjoncteur (20) permettant l'interruption immédiate du courant de phase lorsqu'une perte de pas est détectée.

Fig. 1

Fig.2

Generatorischer Betrieb    Motorischer Betrieb

$+ M_{Kipp}$

$- M_{Kipp}$

Drehmoment

-210  -180  -150  -120  -90  -60  -30  0  30  60  90  120  150  180  210

Polradwinkel[°el]

Fig. 3

EP 3 142 244 B1

Fig. 4

Signal für Schrittverlust
durch dP/dt-Methode

Wirkleistung

Phasenstrom

CH3 10.0A     CH2 2.00V     M 5.00ms     CH4 ʃ

CH4 500mV     27-Jan-15 10:24     <10Hz

Fig. 5

Fig. 6

Fig. 7

HS-Gatesignal

LS-Gatesignal

Phasenstrom

Stromnulldurchgang

Induzierte Gegenspannung

Phasenspannung

CH1 10.0V
CH3 1.00A

CH2 10.0V
CH4 10.0VB<sub>w</sub>

M 100μs
27-Jan-15 14:36

CH3 ⁄
93.7652

Fig. 8

Fig. 9

EP 3 142 244 B1

Geschwindigkeit v

BEMF-Methode und dP/dt-Methode unwirksam

BEMF-Methode wirksam; dP/dt-Methode unwirksam

BEMF-Methode unwirksam; dP/dt-Methode wirksam

EB

v_max

ZB

ZB

v_kritisch

RB

RB

Zeit t

Fig. 10

Signal für Schrittverlus t
durch dP/dt-Methode

Wirkleistung

CH2 2.00V          M 500µs                    CH2 \
CH4 500mVB$_W$     27-Jan-15 12:10            <10Hz

## Fig. 11

*1*

*28*

*29*

Anschlag

*26*

Anschlag

*27*

Differenz

Fig. 12

Fig. 13

Signal für Schrittverlus t
durch dP/dt-Methode

Wirkleistung

Stromzeiger

CH3 1.00A    CH2 2.00V    M 5.00μs    CH2 \
             CH4 500mVB$_W$  27-Jan-15 13:33    <10Hz

Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20140184030 A1
- US 20040032231 A1
- US 7880423 B2
- WO 2007089258 A1
- US 7591448 B2